(19) **Europäisches Patentamt / European Patent Office / Office européen des brevets**

(11) **EP 1 796 953 B1**

(12) **EUROPEAN PATENT SPECIFICATION**

(45) Date of publication and mention of the grant of the patent:
**20.09.2017 Bulletin 2017/38**

(21) Application number: **05810448.0**

(22) Date of filing: **11.10.2005**

(51) Int Cl.:
**B62D 37/00** *(2006.01)*   **B60W 10/04** *(2006.01)*
**B60W 10/18** *(2012.01)*   **B60W 30/02** *(2012.01)*
**B60K 28/14** *(2006.01)*   **B62M 1/00** *(2010.01)*
**B62K 17/00** *(2006.01)*   **A61G 5/04** *(2013.01)*
**B62M 23/02** *(2010.01)*

(86) International application number:
**PCT/US2005/036797**

(87) International publication number:
**WO 2006/042301 (20.04.2006 Gazette 2006/16)**

(54) **VEHICLE CONTROL BY PITCH MODULATION**

FAHRZEUGSTEUERUNG DURCH PITCH-MODULATION

COMMANDE DE VEHICULE PAR MODULATION DE L'INCLINAISON

(84) Designated Contracting States:
**AT BE BG CH CY CZ DE DK EE ES FI FR GB GR HU IE IS IT LI LT LU LV MC NL PL PT RO SE SI SK TR**

(30) Priority: **08.10.2004 US 617244 P**

(43) Date of publication of application:
**20.06.2007 Bulletin 2007/25**

(73) Proprietor: **Segway Inc.**
**Bedford NH 03110 (US)**

(72) Inventors:
• **HEINZMANN, John, David**
**Manchester, NH 03104 (US)**
• **ROBINSON, David, W.**
**Los Altos, CA 94024 (US)**
• **STEVENS, Jon, Michael**
**Manchester, MA 03101 (US)**

• **FIELD, Douglas, J.**
**Bedford, NH 03110 (US)**
• **LUND, Jeremy, B.**
**Milford, NH 03055 (US)**

(74) Representative: **Brown, Alexander Edward et al**
**Venner Shipley LLP**
**200 Aldersgate**
**London EC1A 4HD (GB)**

(56) References cited:
WO-A-2004/007264   DE-A1- 10 353 692
GB-A- 2 388 579    US-A- 5 376 868
US-A- 6 003 624    US-A- 6 076 033
US-A1- 2002 121 394  US-A1- 2003 014 167
US-A1- 2003 195 689  US-A1- 2003 226 698
US-B1- 6 789 640

## Description

Technical Field

The present invention pertains to methods for actively maintaining stability and control of the motion of a vehicle equipped with one or more forward wheels and one or more aft wheels, whereby balanced operation may be enabled in case the front wheels lose, or are removed from, contact with the ground.

Background of the Invention

Human transport devices serve to move a person over a surface and may take many different forms. For example, a human transport device, as the term is used herein, may include, but is not limited to, wheelchairs, motorized carts, all-terrain vehicles, bicycles, motorcycles, cars, hovercrafts, and the like. Some types of human transport may include stabilization mechanisms to help ensure that the device does not fall over and injure the user of the transport device.

A typical four-wheeled wheelchair contacts the ground with all four wheels. If the center of gravity of the combination of the wheelchair and the user remains over the area between the wheels, the wheelchair should not tip over. If the center of gravity is located above and outside of the ground contacting members of the transport device, the transport device may become unstable and tip over.

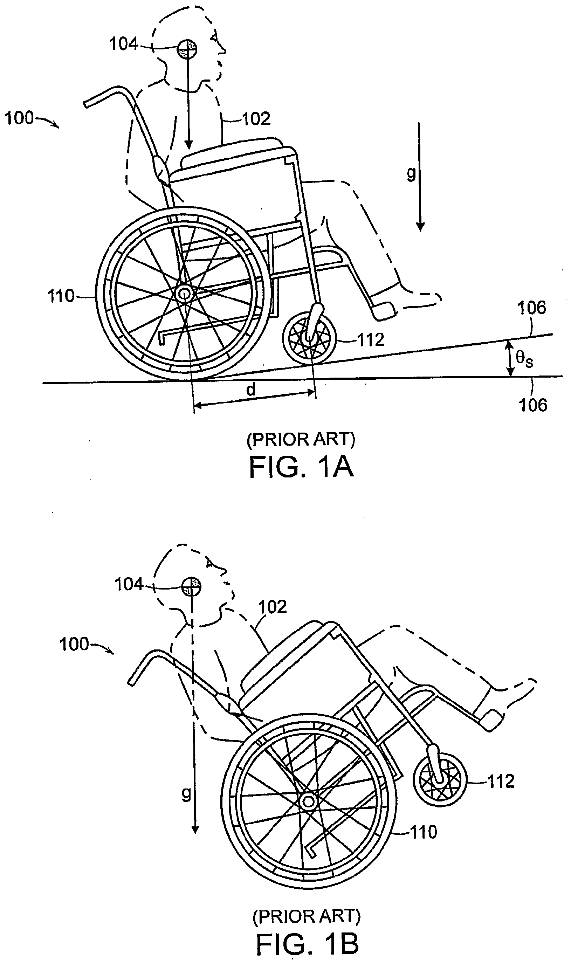

Referring now to FIG. 1A, a typical wheelchair **100** is shown. The wheelchair **100** and the user **102** define a frame. The frame has a center of gravity **104** located at a position vertically disposed above the surface **106.** The term "surface" as it is used herein refers to any surface upon which a human transport device may sit or locomote. Examples of a surface include flat ground, an inclined plane such as a ramp, a gravel covered street, and may include a curb which vertically connects two substantially parallel surfaces vertically displaced from one another (e.g., a street curb).

The surface **106** may be at an incline as compared to the horizontal axis **108** (which is a line in the plane transverse to the local vertical). The angle by which the surface **106** is offset from the horizontal axis **108** is called the surface pitch and will be represented by an angle denoted as $\theta_s$.

The front wheel **112** and the rear wheel **110** of the wheelchair **100** are separated by a distance **d.** The distance **d** between the two wheels may be measured as a linear (e.g., straight line) distance. The wheels **110** and **112** typically have opposing counterparts (not shown) on the other side of the wheelchair. The opposing counterparts may each share an axis with wheels **110** and **112,** respectively. The area covered by the polygon which connects the points where these four wheels touch the ground (or the outside portions of the ground contacting parts, when the ground contacting part may cover more than a point) provides an area over which the center of gravity **104** may be located while the wheelchair remains stable. This area may be referred to as the footprint of the device. The footprint of a device, as the tern is used herein, is defined by the projection of the area between the wheels as projected onto the horizontal plane. If the center of gravity is above this location, the transport device should remain stable.

If the center of gravity **104** is vertically displaced above the surface **106** and outside the footprint (i.e., the projection of area between the wheels **110** and **112** onto the horizontal plane), wheelchair **100** may tip over. This could happen, for example, when the wheelchair is on a surface that has a steep incline, or, alternatively, if the user 'pops a wheelie' in order to surmount a curb, for example. When on a steep incline, the center of gravity **104** may shift back and cause the wheelchair **100** to flip over backwards. This is shown in FIG. 1B where the center of gravity **104** is located at a position that is outside the footprint of the wheelchair **100.** The center of gravity **104** is shown including a gravity acceleration vector (**g**) which linearly translates the center of gravity **104** in a downward direction. The wheelchair **100** may rotate about an axis of the rear wheel **110** until the wheelchair **100** contacts the surface being traversed.

User **102** may help to return the center of gravity **104** to a location that is above the area between the wheels **110** and **112** by leaning forward in the wheelchair **100.** Given this limited control of the location of the center of gravity **104,** it is clear that human transport devices such as wheelchairs may encounter great difficulties when traversing uneven surfaces such as a curb or steps.

Some vehicles, by virtue of their weight distribution or typical modes of operation are prone to fore-aft instability and end-over-end ("endo") rollovers. In operation of an all-terrain vehicle (ATV), for example, it is not always possible or desirable to maintain all wheels of the vehicle in contact with the underlying surface at all times. Yet, it is desirable to preclude loss of control of the vehicle or end-over-end roll-over. ATVs may benefit from stabilization in one or more of the fore-aft or left-right planes, especially under conditions in which fewer than a stable complement of wheels are in contact with the ground. Vehicles of this sort may be more efficiently and safely operated employing control modes supplementary to those described in the prior art.

US 5,376,868 describes a controller for an electric vehicle that senses difficulties when driving each of a plurality of driven wheels and determines a driving force for each driven wheel accordingly.

US 2002/0121394 describes a system for controlling a human transport device such that the human transport device remains in an upright position regardless of the surface being traversed.

US 2003/0226698 describes a personal transporter which provides both for propulsion by a user and, at the same time, for dynamic stabilization by means of a powered actuator.

US 6,003,624 describes a double-inverted wheeled passenger carrier that is actively stabilizing on two or more axially-spaced wheels through a controller that senses and adjusts three degrees of freedom that allows the wheeled passenger carrier to actively stabilize itself to keep a passenger essentially upright during movement, including traversing stairs and the like.

**Summary of the Invention**

In accordance with an aspect of the invention, there is provided a vehicle as set out in claim 1.

Further aspects of the invention provide a vehicle as set out in any of the appended dependent claims hereafter.

Brief Description of the Drawings

The invention will be more readily understood by reference to the following description, taken with the accompanying drawings, in which:

FIGS. **1A** and **1B** are schematic side views of a prior art personal vehicle of the type in which an embodiment of the invention may be advantageously employed;

FIG. **2** is a diagram of typical components of a personal vehicle of the type in which an embodiment of the invention may be advantageously employed indicating the variables used in the description of specific embodiments of the present invention;

FIG. **3** is a block diagram depicting the coupling of pitch and yaw controller outputs for generation of wheel amplifier commands;

FIG. **4A** is a block diagram showing the constitutive inputs of a pitch command in accordance with an embodiment of the present invention;

FIG. **4B** is a block diagram showing the constitutive inputs of a pitch command with a unilateral limit in accordance with an embodiment of the present invention;

FIG. **5A** is a block diagram showing the constitutive inputs of a yaw command in accordance with embodiments of the present invention;

FIGS. **5B** and **5C** are block diagrams of different embodiments of a yaw controller in accordance with embodiments of the present invention;

FIG. **6** is a side view of an all-terrain vehicle capable of balancing operation in accordance with one embodiment of the present invention;

FIG. **7** is a perspective view from above of the embodiment of the invention of Fig. 6;

FIG. **8** is a further side view of the all-terrain vehicle of Fig. 6 showing operation by a standing user;

FIG. **9** is yet a further side view of the all-terrain vehicle of Fig. 6 showing operation by a seated user;

FIG. **10** shows the coupling of the handlebar to the upper pushrods for steering of the front wheels in accordance with a preferred embodiment of the invention; and

FIG. **11** shows the coupling of the lower pushrods to steer the forward wheels, in accordance with the embodiment of Fig. 10.

Detailed Description of Specific Embodiments

Definitions:

A vehicle may be said to act as "balancing" if it is capable of operation on one or more wheels but would be unable to stand on those wheels alone, but for operation of a control loop governing operation of the wheels. A balancing vehicle, when operated in a balancing mode, lacks static stability but is dynamically balanced. The wheels, or other ground-contacting elements, that provide contact between such a vehicle and the ground or other underlying surface, and minimally support the transporter with respect to tipping during routine operation, are referred to herein as "primary wheels." "Stability" as used in this description and in any appended claims refers to the mechanical condition of an operating position with respect to which the system will naturally return if the system is perturbed away from the operating position in any respect. The term "system" refers to all mass caused to move due to motion of the wheels with respect to the surface over which the vehicle is moving, and.thus includes both the vehicle and the rider.

The term "lean" is often used with respect to a system balanced on a single point of a perfectly rigid member.

In that case, the point (or line) of contact between the member and the underlying surface has zero theoretical width. In that case, furthermore, lean may refer to a quantity that expresses the orientation with respect to the vertical (i.e., an imaginary line passing through the center of the earth) of a line from the center of gravity (CG) of the system through the theoretical line of ground contact of the wheel. Recognizing that the tire of an actual wheel is not perfectly rigid, the term "lean" is used herein in the common sense of a theoretical limit of a rigid ground-contacting member.

Operation in Accordance with Embodiments of the Invention:

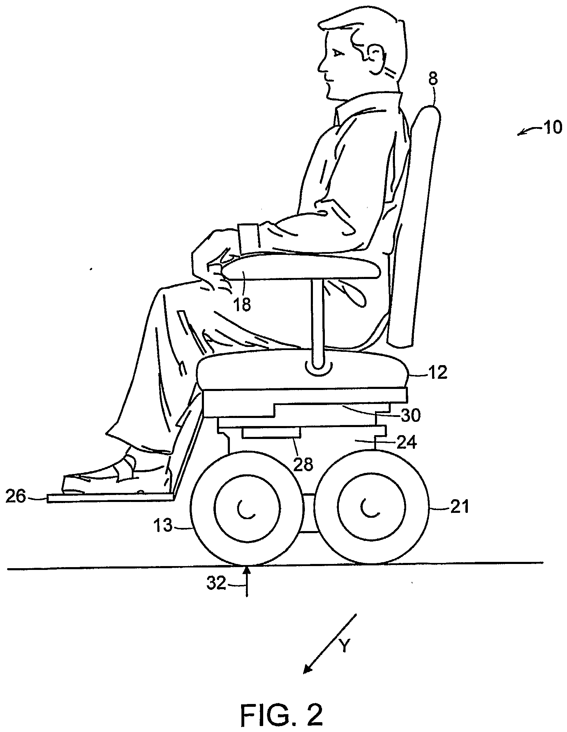

One embodiment of a stabilized vehicle in accordance with the present invention is depicted in Fig. 2 and designated generally by numeral **10.** User **8,** as shown in Fig. 2, is seated position on user support **12** of vehicle **10,** though it is to be understood that user 8 may be supported otherwise than by sitting on a seat, and may, for example, within the scope of the present invention, be standing on a user support in the form of a platform.

Aft wheels **21** (of which only one is visible in the side-view of Fig. 2) are coaxial about an axis defined as the Y axis. Each of rear wheels **21** is driven by a motor actuator (not shown) disposed within a power base **24** such that steering may be effectuated through differential torque applied to respective rear wheels **21.** Compensating, by differential actuation of the rear wheels for the increased rotational travel of the outer wheel on a turn may be referred to herein as an "active differential." Rider **8** may be supported on vehicle **10** in various body positions, thereby controlling the position of the center of mass of the vehicle, as governed by the distribution of weight of the load, namely the user. For example, user **8** may be seated, as shown in Fig. 2, on seat **12,** with his feet resting on footrest **26.**

The embodiment shown of vehicle **10,** additionally, has two forward wheels **13** (of which one is visible in the side view of Fig. 2), typically in contact with the ground during ordinary operation. Forward wheel **13** and one or more other forward wheels may be mounted on a common axle or otherwise, and pivoting of any of the forward wheels is within the scope of the present invention. Personal vehicles designed for enhanced maneuverability and safety may also include one or more clusters of wheels, with the cluster and the wheels in each cluster capable of being motor-driven independently of each other. Such vehicles are described in U.S. Patent nos. 5,701,965, 5,971,091, 6,302,230, 6,311,794, and 6,553,271.

Controller **30** provides for stability of the vehicle by continuously sensing the orientation of the vehicle and the commanded velocity, as described in detail below, determining the corrective action to maintain stability, and commanding the wheel motors to make any necessary corrective action.

In accordance with preferred embodiments of the present invention, the same control law is applied whether or not forward wheels of the vehicle are in contact with the ground.

Steering or other control may be provided by means of a user input device **18,** which may be a joystick, handlebars or by any other user input mechanisms. A variety of steering devices which are further examples of user input mechanisms that may be employed within the scope of the present invention are described in U.S. Patents nos. 6,581,714 and 6,789,640.

A sensor unit **28** is provided as part of power base **24** for providing one or more sensor signals to controller **30.** Sensor unit **28** may provide a measure of pitch rate and/or pitch of the vehicle, and may employ inertial sensing of the type described in detail in US Patent no. 6,332,103. Alternatively, or additionally, sensor unit **28** may include a force sensor for measuring the force (designated by arrow **32**) normal to the underlying surface that is exerted on the underlying surface by wheel **13** (and, reciprocally, on the wheel by the underlying surface). Force sensors, such as those based on piezoresistors, are well-known in the art, and any kind of force sensor is within the scope of the present invention.

A simplified control algorithm for achieving balance in the embodiment of the invention according to Fig. 2 is now described. The control algorithm is described for the case of a single driven wheel, as may be employed for stabilization of an in-line bicycle or motorcycle. The generalization to the case of multiple driven wheels is discussed in detail below.

To achieve dynamic control to insure stability of the system, the wheel torque T in this embodiment is governed by the following simplified control equation:

$$T = K_1\,(\theta) \bullet (\theta - \theta_0) + K_2 \bullet \dot\theta + K_3 \bullet (v\text{-}v_{command}) + K_4 \bullet \int (v\text{-}v_{command})\,dt + A \bullet f(\omega t),$$

$$(\text{Eqn. 1})$$

where:

- T denotes a torque applied to a ground-contacting element about its axis of rotation;
- $K_1(\theta)$ is a gain function that may depend, as discussed below, on the instantaneous value of lean $\theta$;
- $\theta$ is a quantity corresponding to the lean of the entire system about the ground contact region beneath the common axis Y of the rear wheels, with $\theta_0$ representing the magnitude of a system pitch offset, all as discussed in detail below;
- v identifies the fore-aft velocity along the surface, with $v_{command}$ representing the magnitude of a user input such as a throttle constituted by user input (e.g., joystick) **18**;
- a dot over a character denotes a variable differentiated with respect to time; and
- a subscripted variable denotes a specified offset that may be input into the system as described below; and
- $K_1$, $K_2$, $K_3$ and $K_4$ are gain functions or coefficients that may be configured, either in design of the system or in real-time, on the basis of a current operating mode and operating conditions as well as preferences of a user. The gain coefficients may be of a positive, negative, or zero magnitude. The gains $K_1$, $K_2$, $K_3$ and $K_4$ are dependent upon the physical parameters of the system and other effects such as gravity. The simplified control algoritlun of Eqn. 1 maintains balance of the vehicle in the presence of changes to the system's center of mass due to body motion of the rider or features of the underlying terrain.

The final term of Eqn. (1) allows for application of aperiodic driving component, of period $2\pi/\omega$, and amplitude A (which may be zero, in the case of no applied modulation), to the torque applied to the driven wheel. The periodic function $f(\omega t)$ may be a sinusoidal function, for example. DE 10 353 692 A1 and US 2003/0 014 167 A1 disclose related vehicle controllers for damping pitch angle vibrations or oscillations resulting from driver input demands. It should be noted that the amplifier control may be configured to control motor current (in which case torque **T** is commanded) or, alternatively, the voltage applied to the motor may be controlled, in which case the commanded parameter is velocity.

The effect of $\theta_0$ in the above control equation (Eqn. 1) is to produce a specified offset $\theta_0$ from the non-pitched position, $\theta=0$. Adjustment of $\theta_0$ will adjust the vehicle's offset from a non-pitched position. In some embodiments, pitch offset may be adjusted by the user. Alternatively, $\theta_0$ can be set by the control system of the vehicle as a method of limiting the speed and/or the performance of the vehicle. According to the invention, a backward tilting limit is imposed, with the gain function $K_1$ substantially zero until the tilting limit is approached. Thus, the rider is free to lean the vehicle backward by shifting his weight, and thus the center-of-mass of the vehicle system, backward, until the tilt limit is approached. Then, $K_1$ assumes a non-zero value, and a term appears in control equation (1) that tends to counteract further backward leaning of the vehicle.

The magnitude of $K_3$ determines the gain of the user input, and may advantageously be a non-linear function, providing, for example, greater sensitivity near zero velocity. The $K_2$ term provides for control based on the instantaneous pitch rate, $\dot{\theta}$, of the vehicle, as measured by a pitch rate sensor or by differentiation of a measured pitch.

The response of a normal force **32** measured by sensor **28** in response to the applied pitch modulation $Af(\omega t)$, may be used, in accordance with embodiments of the invention, to counteract further backward leaning of the vehicle and maintain contact of the forward wheel with the ground, or, alternatively, impose a limit on rearward tilt.

In order to accommodate two wheels instead of the one-wheel system that has been described with respect to Eqn. 1, separate motors may be provided for left and right wheels of the vehicle and the torque desired from the left motor and the torque to be applied by the right motor can be governed in the general manner described above. Additionally, tracking both the left wheel motion and the right wheel motion permits adjustments to be made to prevent unwanted turning of the vehicle and to account for performance variations between the two drive motors.

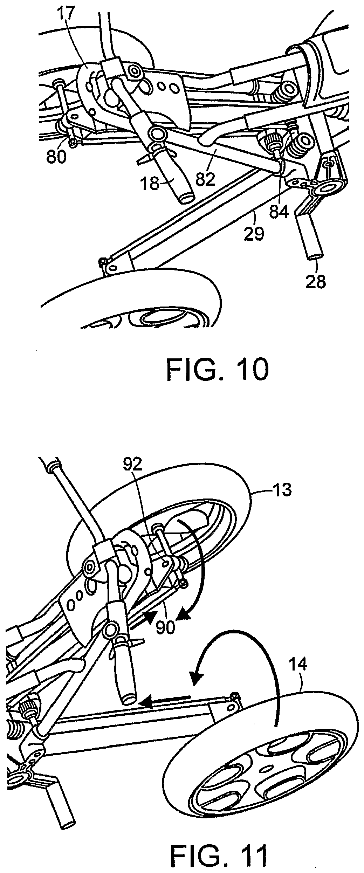

In accordance with preferred embodiments of the invention, differential drive of the two rear wheels tracks turns according to the same yaw input as applied, via mechanical linkages, to the front wheels. This operation is described below, with reference to Figs. 10 and 11.

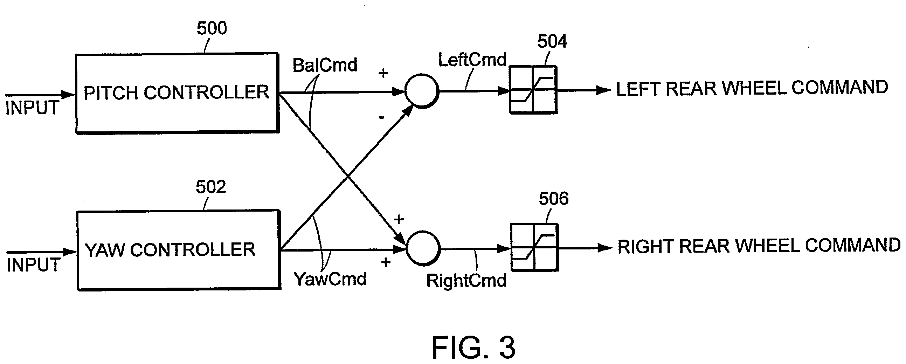

Referring now to Fig. 3, steering, or yaw control, of the vehicle may be accomplished by adding a turning command to the wheel amplifiers and have the following form. Inputs (described below) corresponding to values of vehicle parameters are used by Pitch Controller **500** and Yaw Controller **502** to derive a balance control signal BalCmd and a yaw control signal YawCmd according to algorithms discussed in the succeeding paragraphs.

$$\mathrm{LeftCmd} = \mathrm{BalCmd} + \mathrm{YawCmd} \qquad (2)$$

$$\mathrm{RightCmd} = \mathrm{BalCmd} - \mathrm{YawCmd} \qquad (3)$$

The LeftCmd and RightCmd are the command sent by the controllers **500** and **502** to the left and right motor amplifiers, respectively, after differentiation or other conditioning as appropriate. For instance and as shown by way of example in Fig. 3, the LeftCmd and RightCmd's may be conditional, respectively, by differentiators **504** and **506**. The LeftCmd and RightCmd represent voltage if the amplifiers are in voltage control mode, current if the amplifiers are in current control mode, or duty cycle if the amplifiers are in duty cycle control mode. BalCmd is the command sent by the Pitch Controller **500** to each amplifier to maintain the transporter in a balanced state while moving or while at rest. The YawCmd causes the transporter to turn by reducing the command to one of the wheels while increasing the command to the other wheel. For example, a positive YawCmd increases the command to the left wheel while decreasing the command to the right wheel thereby causing the transporter to execute a right turn. The YawCmd may be generated by a yaw-input device described above with no feedback loop or in a closed cycle loop to correct yaw position errors as described in U.S. Patent no. 6,288,505.

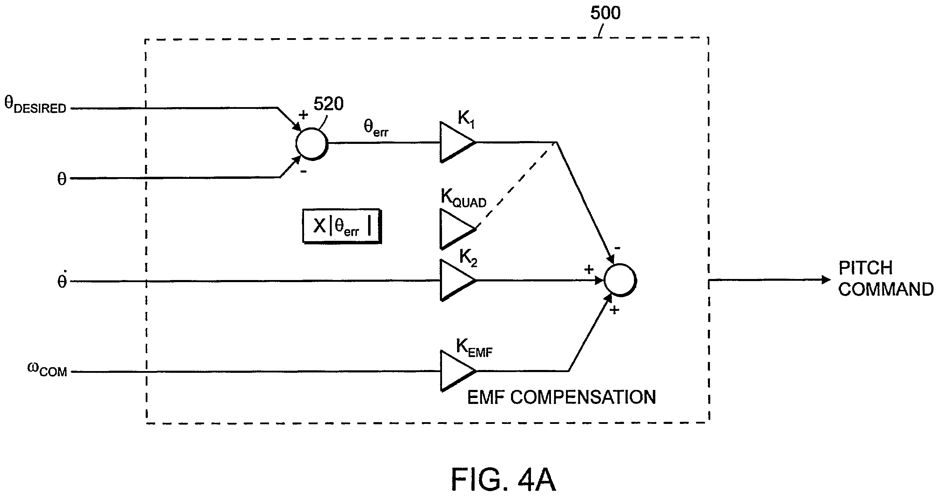

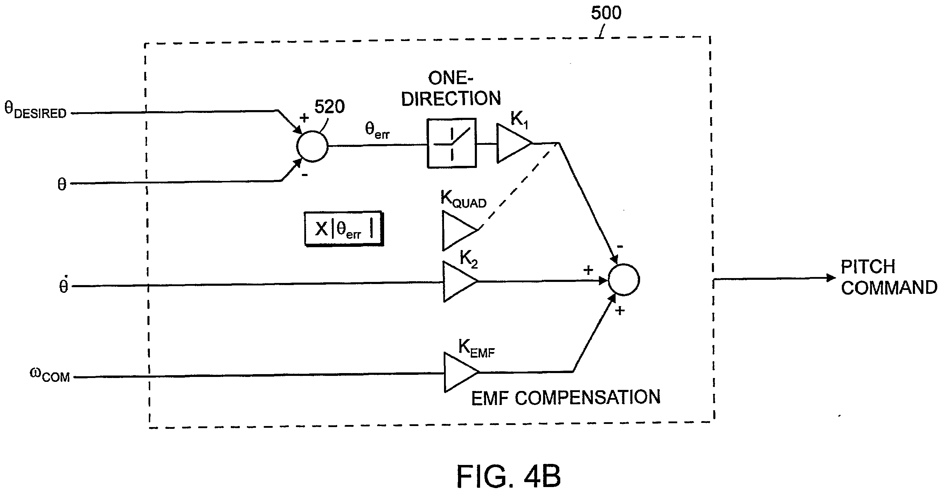

Pitch controller **500** is described in detail with reference to Figs. 4A and 4B. The inputs include a desired pitch $\theta_{desired}$, the actual measured pitch $\theta$, the pitch rate $\dot{\theta}$, and the component of the wheel rotation velocity that is common to the two primary wheels, $\omega_{com}$ Both $\theta$ and $\dot{\theta}$ may be derived from inertial sensing, as described in U.S. Patent no. 6,332,103.

Desired pitch $\theta_{desired}$ and current instantaneous pitch $\theta$ are differenced in summer **520** to produce a pitch error $\theta_{err}$. In accordance with certain embodiments of the present invention, pitch limiting is unilateral, such that a limit is provided on one end of a range of allowed values of pitch. Ifthat pitch is exceeding, a restoring torque moves the vehicle in the direction of the pitch limit.

In accordance with some embodiments of the invention, the user may shift her weight backward, thereby 'popping' the vehicle into a two-wheeled balancing condition where stability is maintained until she shifts her weight forward to restore operation on all wheels.

A term quadratic in pitch error $\theta_{err}$ (preserving the sign of the actual pitch error) may also be provided, as shown in Fig. 4B, thereby providing more intense response to large deviations in pitch as may result from encountering an obstacle, for example. In a voltage control mode, it is desirable to provide an additional term proportional to the wheel rotational velocity to compensate for all, or a portion, of the back-emf generated in proportion to the rotational velocity of the motors.

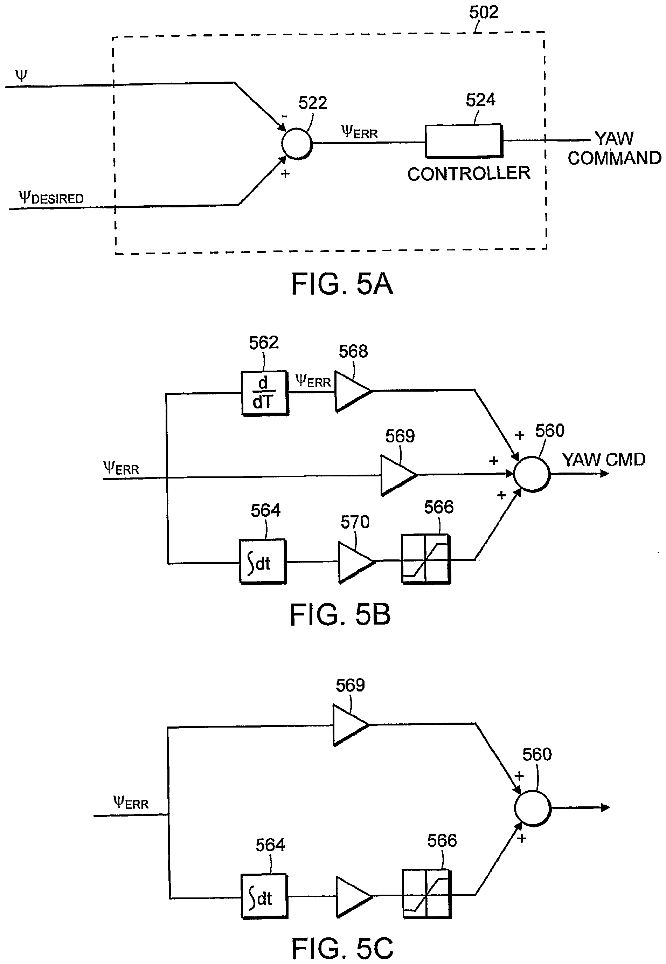

Yaw controller **502** is described in detail with reference to Figs. 5A-5C. Fig. 5A depicts the differencing, in summer **522,** of the current yaw value $\Psi$ with respect to the desired yaw value $\Psi_{desired}$ to obtain the current yaw error $\Psi_{err}$. Desired yaw value $\Psi_{desired}$ is obtained from a user input such as joystick 18 or other user input device employed for directional input as discussed above. The current value of yaw is derived from various state estimates, such as the differential wheel velocities, inertial sensing, etc. Derivation of the yaw command from the yaw error is provided by controller **524** according to various processing algorithms.

Two examples of yaw control algorithms are shown in Figs. 5B and 5C. Specifically, Fig. 5B shows a control law implemented input signal $\Psi_{err}$ is added, by summer **560,** to the derivative of itself (output of differentiator **562**) and the intergration of itself (output of integrator **564**). Of course, and as shown by in Fig. 5B, each signal could have a gain applied to it (for example, by gain blocks **568, 569,** and **570**) or other signal processing such as smoother **566.**

Another possibility is to simply omit the derivative signal as shown in Fig. 5C.

Of course, various controller transfer strategies may be implemented with proportional, derivative, and 'three term' 'PID' functions as depicted.

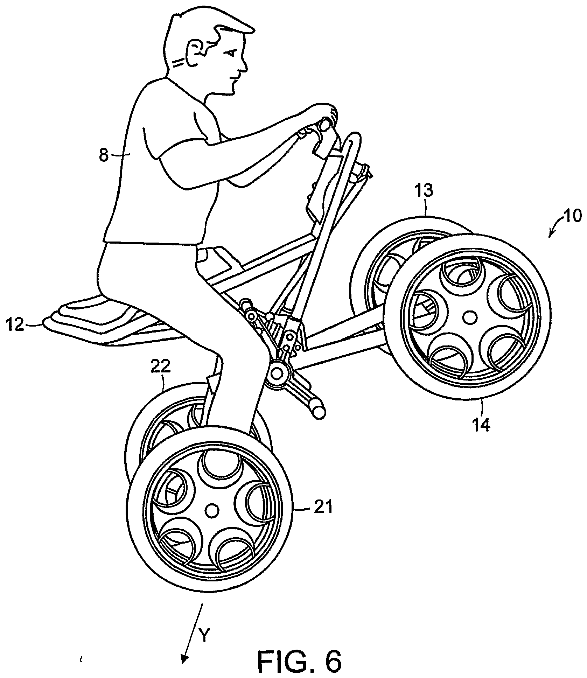

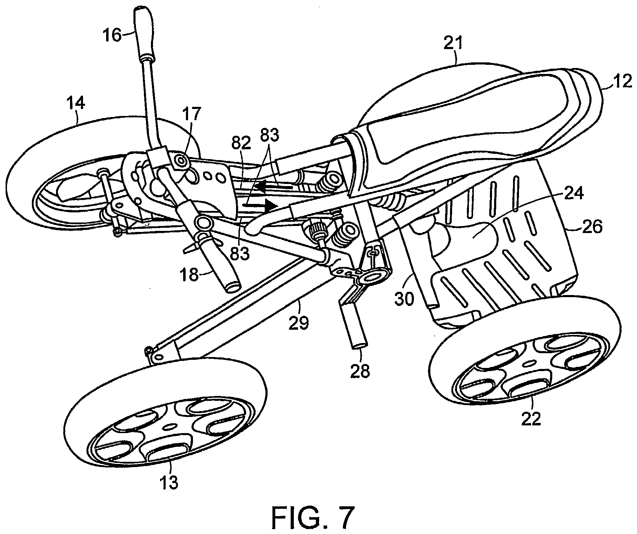

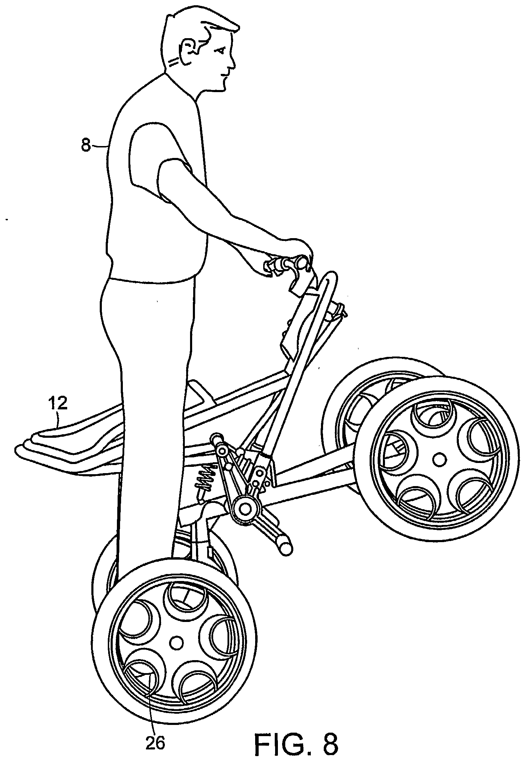

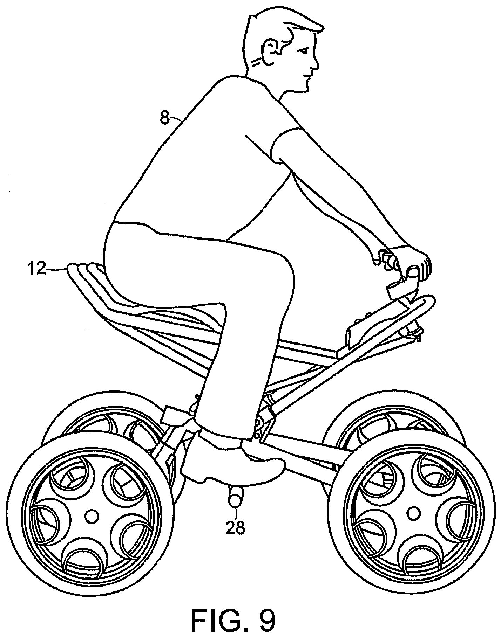

The present invention may also be embodied in a balancing all-terrain vehicle as depicted in Fig. 6 and designated generally by numeral **10**. User **8,** as shown in Fig. 6, is in a seated position on user support **12** of all-terrain vehicle **10**. Aft wheels **21** and **22** are shown as coaxial about an axis defined as theY axis. Referring now to the perspective view of all-terrain vehicle 10, from the top, shown in Fig. 7, each of rear wheels **21** and **22** is driven by a motor actuator **24** such that steering may be effectuated through differential torque applied to of rear wheels **21** and **22**. Compensating, by differential actuation of the rear wheels for the increased rotational travel of the outer wheel on a turn may be referred to herein as an "active differential. Rider **8** may be supported on vehicle **10** in various body positions, thereby controlling the position of the center of mass of the vehicle, as governed by the distribution of weight of the load, namely the user. For example, user **8** may be seated, as shown in Fig. 6, on seat **12,** with his feet resting on platform **26** (shown in Fig. 7), and may shift his weight relative to the vehicle by positioning himself along the length of seat **12**. Alternatively, user **8** may stand on platform **26,** with legs athwart seat **12,** as shown in Fig. 8, or may sit on seat **12** with feet resting on foot rests **28,** as shown in Fig. 9.

Referring again to Fig. 6, the embodiment shown of vehicle **10,** additionally, has two forward wheels, **13** and **14,** typically in contact with the ground during ordinary operation. In the embodiment of the invention shown, by way of example in Fig. 7, each forward wheel **13** and **14** is mounted on a separate suspension strut **29** such that each forward wheel is suspended independently of one another.

Controller **30** (shown in Fig. 7) provides for stability of the vehicle by continuously sensing the orientation of the vehicle and the commanded velocity, as has been described above, determining the corrective action to maintain stability, and commanding the wheel motors to make any necessary corrective action. In accordance with preferred embodiments of the present invention, the same control law may be applied whether or not forward wheels **13** and **14** of the vehicle **10** are in contact with the ground.

Steering or other control may be provided by the user's rotation of handlebar **18** (shown in Fig. 7) about pivot **17,** or by any other user input mechanisms. A variety of steering devices which are further examples of user input mechanisms that may be employed within the scope of the present invention are described in U.S. Patents nos. 6,581,714 and 6,789,640. Handlebar **18** may also support user instruments and other user controls such as a throttle, within the scope of the invention.

In operation of a vehicle that may operate on either two or four wheels, it may be beneficial that if a turn is initiated in one mode, it be smoothly continued, either as wheels leave the ground or as wheels remake ground contact. To that end, in accordance with preferred embodiments of the invention, a mechanical linkage is provided between the user yaw input and the forward wheels, while the rear wheels are controlled, in synchrony with any turn initiated by the user input, by means of differential rotation of the wheels. Referring to Fig. 10, vehicle steering is implemented, in accordance with the embodiment shown, by turning handlebar **18** about pivot **17.** This serves two functions: steering the forward wheels, and providing electrical input to cause differential rotation of the aft wheels. To steer the forward wheels, motion is transferred, via bellcrank **80,** to fore-aft axial motion of upper push rods **82,** as indicated by arrows **83** in Fig. 7. Bellcrank **80** is a lever with two arms forming a fixed angle between them, and a fulcrum at the apex of the angle. This allows rotational motion (of the handlebar pivot) substantially transverse to the ground to be transferred to motion (of the upper push rods) having a significant component parallel to the ground. Upper push rods **82,** in turn, via middle bellcranks **84,** transfer motion to lower pushrods **90,** shown in Fig. 11, which turn forward wheels **13** and **14** by causing them to pivot about vertical pivot axes 92. It is to be understood that any other couplings, mechanical or motorized, between the user input and the angle of forward wheels **13** and **14,** may also be employed within the scope of the present invention.

At the same time that the user yaw input, such as the handlebar, governs the steering of the forward wheels as described above, a signal is generated, by means of a rotational transducer, or otherwise, to serve as the input to yaw controller **502** (shown in Fig. 3) to govern differential actuation of the rear wheels. Thus, the user-intended steering is accomplished, in accordance with this invention, whether or not the forward wheels are in contact with the ground. Various means of converting the mechanical user input (such as handlebar rotation angle) to a yaw signal input to the controller **70** are known in the art, such as those described in U.S. Patent no. 6,581,714, for example, and any such means are encompassed within the scope of the present invention.

The described embodiments of the invention are intended to be merely exemplary and numerous variations and modifications will be apparent to those skilled in the art. All such variations and modifications are intended to be within the scope of the present invention as defined in the appended claims.

**Claims**

**1.** A vehicle comprising:

a plurality of wheels (13,14,21,22), including at least one forward wheel (13,14) and at least one aft wheel (21,22); at least one motor actuator that drives each aft wheel; a sensor unit (28) for providing a pitch signal representing a measure of a pitch angle of the vehicle; and a controller (30) that continuously governs the at least one motor actuator in such a manner as to apply a torque value (T) to the at least one aft wheel to dynamically stabilize the vehicle when the at least one forward wheel is not in contact with an underlying surface, the controller continuously governing the at least one motor actuator in accordance with a control law, wherein the control law applied to dynamically stabilize the vehicle is the same whether or not the at least one forward wheel is in contact with the underlying surface, and wherein the control law is configured to determine the torque value (T) and includes a term that is a function of the measured pitch angle,

**characterized in that** said term appears when the measured pitch angle is greater than a predetermined pitch offset value ($\theta_0$) tending to counteract further backward leaning of the vehicle.

**2.** A vehicle according to claim 1, further comprising:

a right aft actuator that drives a right aft wheel; and a left aft actuator that drives a left aft wheel independently of the right aft wheel thus allowing the controller to govern differential rotation of the left and right aft wheels for controlling yaw of the vehicle.

**3.** A vehicle according to claim 1, further comprising a user input device (18) for providing a throttle output signal and wherein the controller (30) is further arranged and configured to govern the at least one motor actuator according to a control law based at least upon the throttle output signal or the measured pitch angle or a measured pitch rate.

4. A vehicle according to claim 2, further comprising:

at least one yaw controller (16) connected to impart direction on the at least one forward wheel,
wherein the controller (30) is further configured to replicate the direction imparted on the at least one forward wheel by the at least one yaw controller (16) by governing differential rotation of the left and right aft wheels, and further wherein the vehicle is an all-terrain vehicle suitable for operation on just the left and right aft wheels.

**Patentansprüche**

1. Fahrzeug, umfassend:

eine Vielzahl von Rädern (13, 14, 21, 22) mit wenigstens einem Vorderrad (13, 14) und wenigstens einem Hinterrad (21, 22);
wenigstens einen Motorantrieb, der jedes Hinterrad antreibt;
eine Sensoreinheit (28) zum Bereitstellen eines Pitch-Signals, das ein Maß eines Pitch-Winkels des Fahrzeugs darstellt; und
eine Steuereinrichtung (30), die den wenigstens einen Motorantrieb kontinuierlich derart lenkt, dass ein Drehmomentwert (T) auf das wenigstens eine Hinterrad angewandt wird, um das Fahrzeug dynamisch zu stabilisieren, wenn das wenigstens eine Vorderrad nicht mit einer darunterliegenden Fläche in Kontakt ist, wobei die Steuereinrichtung den wenigstens einen Motorantrieb gemäß einem Steuerungsgesetz kontinuierlich lenkt, wobei das Steuerungsgesetz, das angewandt wird, um das Fahrzeug zu stabilisieren, dasselbe ist, unabhängig davon, ob das wenigstens eine Vorderrad mit einer darunterliegenden Fläche in Kontakt ist oder nicht, und wobei das Steuerungsgesetz dazu konfiguriert ist, den Drehmomentwert (T) zu bestimmen, und einen Term beinhaltet, der von dem gemessenen Pitch-Winkel abhängig ist, **dadurch gekennzeichnet, dass** der Term erscheint, wenn der gemessene Pitch-Winkel größer als ein vorgegebener Pitch-Versatzwert ($\theta_0$) ist, der tendenziell einem weiteren Zurücklehnen des Fahrzeugs entgegenwirkt.

2. Fahrzeug nach Anspruch 1, ferner umfassend:

einen rechten hinteren Antrieb, der ein rechtes Hinterrad antreibt; und
einen linken hinteren Antrieb, der ein linkes Hinterrad unabhängig vom rechten Hinterrad antreibt und es dadurch der Steuereinrichtung ermöglicht, die Drehdifferenz des linken und rechten Hinterrads zum Steuern der Gierung des Fahrzeugs zu lenken.

3. Fahrzeug nach Anspruch 1, ferner umfassend eine Benutzereingabevorrichtung (18) zum Bereitstellen eines Drosselausgangssignals, und wobei die Steuereinrichtung (30) ferner dazu angeordnet und konfiguriert ist, den wenigstens einen Motorantrieb gemäß einem Steuerungsgesetz zu lenken, das wenigstens auf dem Drosselausgangssignal oder dem gemessenen Pitch-Winkel oder einer gemessenen Pitch-Rate beruht.

4. Fahrzeug nach Anspruch 2, ferner umfassend:

wenigstens eine Gierungssteuereinrichtung (16), die verbunden ist, um dem wenigstens einen Vorderrad eine Richtung zu geben,
wobei die Steuereinrichtung (30) ferner dazu konfiguriert ist, die Richtung, die dem wenigstens einen Vorderrad durch die wenigstens eine Gierungssteuereinrichtung (16) gegeben wurde, zu replizieren, indem sie die Drehdifferenz des linken und rechten Hinterrads lenkt, und
wobei das Fahrzeug ferner ein geländegängiges Fahrzeug ist, das zum Betrieb auf nur dem linken und rechten Hinterrad geeignet ist.

**Revendications**

1. Véhicule comprenant :

une pluralité de roues (13, 14, 21, 22) comprenant au moins une roue avant (13, 14) et au moins une roue

8

arrière (21, 22) ; au moins un actionneur de moteur qui entraîne chaque roue arrière ;

une unité de capteur (28) pour la fourniture d'un signal d'inclinaison représentant une mesure d'un angle d'inclinaison du véhicule ; et

un dispositif de commande (30) qui régit en continu l'au moins un actionneur de moteur de manière à appliquer une valeur de couple (T) à l'au moins une roue arrière pour stabiliser dynamiquement le véhicule lorsque l'au moins une roue avant n'est pas en contact avec une surface sous-jacente, le dispositif de commande régissant en continu l'au moins un actionneur de moteur selon une loi de commande,

dans lequel la loi de commande appliquée pour stabiliser dynamiquement le véhicule est la même que l'au moins une roue avant soit en contact ou non avec la surface sous-jacente, et

dans lequel la loi de commande est configurée pour déterminer la valeur de couple (T) et comprend un terme qui est une fonction de l'angle d'inclinaison mesuré,

**caractérisé en ce que** ledit terme apparaît lorsque l'angle d'inclinaison mesuré est supérieur à une valeur de décalage d'inclinaison prédéterminée ($\theta_0$) tendant à contrecarrer une inclinaison supplémentaire vers l'arrière du véhicule.

2. Véhicule selon la revendication 1, comprenant en outre :

un actionneur arrière droit qui entraîne une roue arrière droite ; et

un actionneur arrière gauche qui entraîne une roue arrière gauche indépendamment de la roue arrière droite permettant ainsi au dispositif de commande de régir une rotation différentielle des roues arrière gauche et droite pour commander le lacet du véhicule.

3. Véhicule selon la revendication 1, comprenant en outre un dispositif d'entrée d'utilisateur (18) pour la fourniture d'un signal de sortie papillon et dans lequel le dispositif de commande (30) est agencé et configuré en outre pour régir l'au moins un actionneur de moteur selon une loi de commande basée au moins sur le signal de sortie papillon ou l'angle d'inclinaison mesuré ou un taux d'inclinaison mesuré.

4. Véhicule selon la revendication 2, comprenant en outre :

au moins un dispositif de commande de lacet (16) relié pour communiquer une direction sur l'au moins une roue avant,

dans lequel le dispositif de commande (30) est configuré en outre pour reproduire la direction communiquée sur l'au moins une roue avant par l'au moins un dispositif de commande de lacet (16) en régissant la rotation différentielle des roues arrière gauche et droite, et

dans lequel en outre le véhicule est un véhicule tout-terrain adapté pour fonctionner sur les seules roues arrière gauche et droite.

(PRIOR ART)
# FIG. 1A

(PRIOR ART)
# FIG. 1B

FIG. 2

FIG. 3

EP 1 796 953 B1

FIG. 4A

FIG. 4B

EP 1 796 953 B1

FIG. 5A

FIG. 5B

FIG. 5C

FIG. 6

FIG. 7

FIG. 8

FIG. 9

FIG. 10

FIG. 11

**EP 1 796 953 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5376868 A
- US 20020121394 A
- US 20030226698 A
- US 6003624 A
- US 5701965 A
- US 5971091 A
- US 6302230 B
- US 6311794 B
- US 6553271 B
- US 6581714 B
- US 6789640 B
- US 6332103 B
- DE 10353692 A1
- US 20030014167 A1
- US 6288505 B